(19) Europäisches Patentamt
European Patent Office
Office européen des brevets

(11) **EP 3 271 239 B1**

(12) **EUROPÄISCHE PATENTSCHRIFT**

(45) Veröffentlichungstag und Bekanntmachung des Hinweises auf die Patenterteilung:
**05.12.2018 Patentblatt 2018/49**

(51) Int Cl.:
***B62K 19/36*** *(2006.01)*

(21) Anmeldenummer: **16706664.6**

(22) Anmeldetag: **29.02.2016**

(86) Internationale Anmeldenummer:
**PCT/EP2016/054208**

(87) Internationale Veröffentlichungsnummer:
**WO 2016/146368 (22.09.2016 Gazette 2016/38)**

(54) **VERFAHREN ZUR STEUERUNG EINES ANTRIEBS, UM DIE HÖHE EINES SATTELS EINES ZWEIRADS SITUATIONSBEDINGT ZU VERFAHREN, SOWIE EINE DAFÜR VORGESEHENE VORRICHTUNG**

METHOD FOR CONTROLLING A DRIVE FOR DISPLACING THE HEIGHT OF A SADDLE OF A TWO-WHEELED VEHICLE, DEPENDING ON A SITUATION, AND A DEVICE PROVIDED FOR SAME

PROCÉDÉ DE COMMANDE D'UN ENTRAÎNEMENT POUR DÉPLACER LA HAUTEUR D'UNE SELLE D'UN DEUX-ROUES EN FONCTION DE LA SITUATION, ET DISPOSITIF ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2015 DE 102015204880**

(43) Veröffentlichungstag der Anmeldung:
**24.01.2018 Patentblatt 2018/04**

(73) Patentinhaber: **Robert Bosch GmbH
70442 Stuttgart (DE)**

(72) Erfinder: **TEPASS, Bernd
71717 Beilstein (DE)**

(56) Entgegenhaltungen:
| | |
|---|---|
| **EP-A1- 2 540 606** | **EP-A2- 2 657 113** |
| **DE-A1-102010 035 674** | **DE-A1-102010 044 229** |
| **DE-A1-102011 012 063** | **DE-T2- 60 209 510** |
| **DE-U1-202006 010 280** | **JP-A- 2005 262 900** |
| **US-A- 6 050 585** | **US-A1- 2012 274 043** |

EP 3 271 239 B1

**Beschreibung**

Stand der Technik

Die Erfindung betrifft ein Verfahren zur Steuerung eines Antriebs, um einen Sattel eines Zweirads situationsbedingt in seiner Höhe zu verfahren. Zudem betrifft die Erfindung eine Vorrichtung, die dazu eingerichtet ist, ein solches Verfahren auszuführen.

Eine Vorrichtung zur Höhenverstellung eines Sattels eines Zweirads ist beispielsweise in der Gebrauchsmusterschrift DE 20 2011 103 073 U1 aufgezeigt. In dieser Schrift wird zudem ein Verfahren beschrieben, welches die Sattelhöhe situationsbedingt steuert. Der Sattel wird hierbei in Abhängigkeit der Fahrgeschwindigkeit und während des Fahrbetriebs verfahren. So wird der Sattel abgesenkt, falls die Geschwindigkeit des Zweirads eine Grenzgeschwindigkeit unterschreitet, wodurch auf ein Anhalten des Zweirads geschlossen werden kann. Entsprechend wird der Sattel angehoben, falls die Geschwindigkeit des Zweirads eine Grenzgeschwindigkeit überschreitet, wodurch auf ein Anfahren geschlossen werden kann. Folglich ist die Aufstiegsposition üblicherweise tiefer als die Fahrtposition. Auch Dokument EP2540606 offenbart ein Verfahren zur Steuerung eines Antriebs zur situationsbedingten selbsttätigen Einstellung der Sattelposition eines Zweiradsattels. Dokument JP2005262900 offenbart eine Vorrichtung mit einem Antrieb zum situationsbedingten Verfahren eines Sattels eines Zweirads, auf der der Oberbegriff von Anspruch 8 basiert.

Offenbarung der Erfindung

Die Erfindung betrifft ein Verfahren zur Steuerung eines Antriebs, um einen Sattel eines Zweirads, insbesondere eines Fahrrads, in eine Fahrtposition oder in eine Halteposition zu verfahren. Hierbei werden zu Beginn eine Seitenneigung und eine Beschleunigung innerhalb einer ersten Zeitspanne kontinuierlich erfasst, d. h. dass während der ersten Zeitspanne mehrere, insbesondere äquidistante, Messwerte erfasst werden, und es wird eine Geschwindigkeit des Zweirads nach dieser ersten Zeitspanne erfasst. Anschließend wird ein erster Beschleunigungsvergleich durchgeführt, welcher prüft, ob die Beschleunigung wenigstens für eine zweite Zeitspanne größer als eine minimale, positive Beschleunigung ist. Ist dieser erste Beschleunigungsvergleichs positiv, wird ein erster Geschwindigkeitsvergleich durchgeführt, welcher prüft, ob die Geschwindigkeit größer als eine minimale Geschwindigkeit ist. Ist der erste Geschwindigkeitsvergleich positiv, wird der Sattel in die Fahrtposition verfahren. Ist der erste Beschleunigungsvergleich dagegen negativ, wird ein zweiter Beschleunigungsvergleich durchgeführt, welcher prüft, ob die Beschleunigung wenigstens für eine dritte Zeitspanne kleiner als eine minimale, negative Beschleunigung ist. Ist dieser zweite Beschleunigungsvergleich positiv, erfolgt ein zweiter Geschwindigkeitsvergleich, welcher prüft, ob die Geschwindigkeit größer als die minimale Geschwindigkeit ist. Ist dieser zweite Geschwindigkeitsvergleich negativ, wird der Sattel in die Aufstiegsposition verfahren.

Vorteilhaft ist hierbei, dass bei diesem Verfahren auf verschiedene physikalische Betriebsgrößen des Zweirads zurückgegriffen wird, um in Abhängigkeit dieser Größen den Sattel in die Fahrtposition oder die Aufstiegsposition zu verfahren. Zudem wird zwischen einem Fahren bzw. Anfahren und einem Anhalten unterschieden und entsprechend darauf reagiert. So kann, wenn eine Beschleunigung detektiert wird, die größer als die minimale, positive Beschleunigung ist und zudem mindestens über eine zweite Zeitspanne hinweg andauert, davon ausgegangen werden kann, dass das Zweirad in Bewegung versetzt wurde und insbesondere gerade anfährt. Zudem wird durch den ersten Geschwindigkeitsvergleich überprüft wird, ob das Zweirad mindestens eine minimale Geschwindigkeit aufweist. Ist dies der Fall kann davon ausgegangen werden, dass das Zweirad angefahren ist und sich in einem stabilen Zustand befindet. Erst dann ist es unbedenklich, den Sattel in die Fahrtposition zu bringen, ohne die Stabilität des Fahrvorgangs zu verschlechtern, wodurch möglicherweise ein Unfall verursacht werden könnte. Wird dagegen eine Beschleunigung detektiert, die kleiner als eine minimale, negative Beschleunigung ist und wenigstens über eine dritte Zeitspanne hinweg andauert, kann davon ausgegangen werden, dass das Zweirad dabei ist langsamer zu werden und insbesondere anzuhalten. Anhand des zweiten Geschwindigkeitsvergleichs in Verbindung mit dem zuvor durchgeführten Beschleunigungsvergleichen kann darauf geschlossen werden, ob das Zweirad im Begriff ist anzuhalten bzw. bereits angehalten hat.

Hierdurch kann der Sattel situationsbedingt verfahren werden, was zum Einen die Sicherheit für die Person, die das Zweirad benutzt, und zum Anderen den Komfort für diese Person erhöht. Die Sicherheit und der Komfort werden dabei erhöht, indem ein Aufsteigen bzw. Absteigen einer Person auf das Zweirad ermöglicht wird, bei welchem sich der Sattel noch in der Aufstiegsposition befindet. Da in dieser Phase das System aus Person und Zweirad noch am instabilsten ist, ermöglicht ein tiefer Sattel sowohl ein bequemes Aufsteigen bzw. Absteigen auf den Sattel als auch einen sicherer Stand, da die Person, welche bereits auf dem Sattel sitzt, mit beiden Füßen flach auf dem Boden aufsetzen kann. Zudem wird durch das Verfahren des Sattels in die Fahrtposition, wenn ein Fahren bzw. Anfahren des Zweirads erkannt wurde, der Komfort erhöht, da in einer höheren Sitzposition die Kraftübertragung auf das Zweirad verbessert sowie die Belastung des Körpers, insbesondere der Gelenke, während der Fahrt reduziert wird.

Eine vorteilhafte Ausgestaltung des erfindungsgemäßen Verfahrens sieht vor, dass wenn der zweite Beschleunigungsvergleich negativ ist, ein erster Seitenneigungsvergleich durchgeführt wird, welcher prüft, ob ein erster Seitenneigungswert größer als ein erster Seitenneigungsgrenzwert ist, und welcher zudem prüft, ob ein zweiter Seitenneigungswert, welcher nach dem ersten Seitenneigungswert erfasst wurde, kleiner als ein zweiter Seitenneigungsgrenzwert ist. Hierbei ist der erste Seitenneigungsgrenzwert größer gleich dem zweiten Seitenneigungsgrenzwert. Ist der erste Seitenneigungsvergleich dabei positiv, wird der Sattel in die Fahrtposition verfahren.

Vorteilhaft ist hierbei, dass mittels des ersten Seitenneigungsvergleichs auf ein erfolgtes Aufsteigen auf das Zweirad geschlossen werden kann. Dies liegt darin begründet, dass während des Aufstiegsvorgangs das Zweirad im Normalfall zur Seite geneigt und anschließend beim Aufstieg das Zweirad wieder in die Ausgangslage zurückgeführt wird, welche keine oder nur eine sehr geringe seitliche Neigung aufweist. Zudem wird für das situationsbedingte Verfahren des Sattels eine weitere physikalische Betriebsgröße des Zweirads herangezogen. Der erste Seitenneigungsvergleich wird dabei durchgeführt, wenn die Beschleunigung zwischen der minimalen, positiven Beschleunigung und der minimalen, negativen Beschleunigung liegt, bzw. diese Grenzwerte lediglich kürzer als die zweite Zeitspanne bzw. kürzer als die dritte Zeitspanne überschritten wurde. Hierdurch wird vermieden, dass beispielsweise ein leichtes Bewegen des Zweirads beim Aufstiegsvorgang bereits als Anfahren oder Anhalten gewertet wird.

Eine weitere vorteilhafte Ausgestaltung des erfindungsgemäßen Verfahrens sieht vor, dass der Sattel verzögert verfahren wird.

Vorteilhaft ist hierbei, dass durch das verzögerte Verfahren des Sattels die Stabilität des Systems aus Person und Zweirad erhöht wird. So wird ermöglicht, dass der Sattel beim Anfahren bzw. Abbremsen erst verändert wird, sobald der Fahrer des Zweirads sicher fährt bzw. schon angehalten hat. Des Weiteren wird bei Erkennen des Aufstiegs einer Person auf das Zweirad, der Person genügend Zeit gegeben, um auf den Sattel aufzusitzen und möglicherweise bereits anzufahren.

Eine weitere vorteilhafte Ausgestaltung des erfindungsgemäßen Verfahrens sieht vor, dass wenn der erste Geschwindigkeitsvergleich positiv ist, zusätzlich ein zweiter Seitenneigungsvergleich durchgeführt wird, welcher prüft, ob die Seitenneigung nach der ersten Zeitspanne kleiner als ein zweiter Seitenneigungsgrenzwert ist. Ist der zweite Seitenneigungsvergleich positiv, wird der Sattel in die Fahrtposition verfahren.

Vorteilhaft ist hierbei, dass bevor der Sattel verfahren, die Seitenneigung des Zweirads geprüft wird. Hierdurch erfolgt ein Verfahren des Sattels lediglich dann, wenn sich das Zweirad in einer dafür geeigneten, stabilen Position befindet. Folglich wird der Sattel des Zweirads nicht hochgefahren, wenn das Zweirad sich in einer gewissen Schräglage befindet. In solch einer Schräglage könnte ein Verfahren des Sattels den Fahrer des Zweirads irritieren und im schlimmsten Falle derart aus dem Gleichgewicht bringen, dass ein möglicher Sturz folgen könnte. Aus diesem Grund ist ein Verfahren des Sattels auf jeden Fall zu vermeiden, falls das Zweirad eine zu starke Seitenneigung aufweist.

Eine weitere vorteilhafte Ausgestaltung des erfindungsgemäßen Verfahrens sieht vor, dass wenn der erste Seitenneigungsvergleich positiv ist, zusätzlich ein dritter Beschleunigungsvergleich durchgeführt wird, welcher prüft, ob wenigstens ein Beschleunigungswert, welcher zeitlich nach dem zweiten Seitenneigungswert erfasst wurde, größer als die minimale, positive Beschleunigung ist. Ist der dritte Beschleunigungsvergleich dabei positiv, wird der Sattel in die Fahrtposition verfahren.

Vorteilhaft ist hierbei, dass anhand des dritten Beschleunigungsvergleichs eine Bewegung des Zweirads detektiert werden kann, welche nach dem Aufsteigen einer Person auf das Zweirads aufgetreten ist. Aufgrund einer solchen Bewegungsdetektion kann darauf geschlossen werden, ob das Zweirad beispielsweise anfährt. So kann davon ausgegangen werden kann, dass nach einem Aufstieg einer Person auf das Zweirad ein Anfahren erfolgt ist, wenn der dritte Beschleunigungsvergleich positiv ist.

Gemäß einer vorteilhaften Ausgestaltung des erfindungsgemäßen Verfahrens ist vorgesehen, dass wenn der erste Seitenneigungsvergleich positiv ist, zusätzlich ein dritter Geschwindigkeitsvergleich durchgeführt wird, welcher prüft, ob die Geschwindigkeit größer als die minimale Geschwindigkeit ist. Ist der dritte Geschwindigkeitsvergleich dabei positiv, wird der Sattel in die Fahrtposition verfahren.

Vorteilhaft ist hierbei, dass anhand des dritten Geschwindigkeitsvergleichs detektiert werden kann, ob das Zweirad in Bewegung ist, nachdem ein Aufsteigen einer Person auf das Zweirad erkannt wurde und bevor ein Verfahren des Sattels erfolgt ist. So wird der Sattel nur dann verfahren, wenn das Zweirad sich mit einer Geschwindigkeit fortbewegt, die über der minimalen Geschwindigkeit, beispielsweise der Schrittgeschwindigkeit der Person, liegt. Wenn die Geschwindigkeit über dieser minimalen Geschwindigkeit liegt, kann zuverlässig davon ausgegangen werden, dass ein Anfahren erfolgt ist und sich das System aus Person und Zweirad in einem stabilen Zustand befindet.

Gemäß einer weiteren vorteilhaften Ausgestaltung des erfindungsgemäßen Verfahrens ist vorgesehen, dass wenn der erste Seitenneigungsvergleich positiv ist, zusätzlich ein dritter Seitenneigungsvergleich durchgeführt wird, welcher prüft, ob die Seitenneigung nach der ersten Zeitspanne kleiner als der zweite Seitenneigungsgrenzwert ist. Ist der dritte Seitenneigungsvergleich dabei positiv, wird der Sattel in die Fahrtposition verfahren.

Vorteilhaft ist hierbei, dass vor dem Verfahren des Sattels in die Fahrtposition die Seitenneigung des Zweirads geprüft wird, wodurch ein Verfahren des Sattels lediglich dann erfolgt, wenn sich das Zweirad in einer dafür geeigneten, stabilen Position befindet. Somit wird der Sattel des Zweirads in die Fahrtposition verfahren, wenn das Zweirad sich nicht in einer gewissen Schräglage befindet. In solch einer Schräglage könnte ein Verfahren des Sattels den Fahrer des Zweirads irritieren und im schlimmsten Falle derart aus dem Gleichgewicht bringen, dass ein Sturz folgen könnte.

Aus diesem Grund ist ein Verfahren des Sattels auf jeden Fall zu vermeiden, wenn das Zweirad eine zu starke Seitenneigung aufweist.

Zudem betrifft die Erfindung eine Vorrichtung mit einem Antrieb zum situationsbedingten Verfahren eines Sattels eines Zweirads in eine Fahrtposition oder in eine Aufstiegsposition. Der Kern der Erfindung ist, dass der Antrieb innerhalb eines Sattelrohrs des Zweirads angeordnet und mit einer Gewindestange oder einem Ritzel verbunden ist, wobei eine Sattelstange des Sattels eine Zahnschiene aufweist, und wobei die Gewindestange oder das Ritzel an der Zahnschiene anliegen. Hierbei kann über die Bewegung der Gewindestange oder des Ritzels der Sattel verfahren werden.

Vorteilhaft ist hierbei, dass der Antrieb von außen nicht sichtbar ist und zudem vor äußeren Einflüssen, wie beispielsweise Regen und Schmutz, geschützt wird. Zudem kann durch solch einen Antrieb der Sattel gleichmäßig und stufenlos in der Höhe verfahren werden. Hierdurch wird erreicht, dass die Stabilität des Systems aus Person und Zweirad beim Verfahren des Sattels möglichst nicht verringert wird.

Eine vorteilhafte Ausgestaltung der erfindungsgemäßen Vorrichtung sieht vor, dass die Zahnschiene außerhalb der Sattelstange angebracht ist.

Vorteilhaft ist hierbei, dass der Antrieb seitlich innerhalb des Sattelrohrs angeordnet werden kann.

Eine weitere vorteilhafte Ausgestaltung der erfindungsgemäßen Vorrichtung sieht vor, dass die Zahnschiene innerhalb der Sattelstange angebracht ist.

Vorteilhaft ist hierbei, dass der Antrieb zentral im Sattelrohr angeordnet werden kann und das Ritzel folglich mittig in die hohle Sattelstange eindringt. Hierdurch kann die Kraftübertragung mittig auf die Sattelstange wirken. Zudem kann auch eine übliche Sattelstange nachträglich mit einer Zahnschiene versehen werden, damit diese für solche eine Vorrichtung genutzt werden kann.

Zeichnungen

Fig. 1 zeigt ein erstes Ausführungsbeispiel eines erfindungsgemäßen Verfahrens.
Fig. 2 zeigt ein erstes Ausführungsbeispiel einer erfindungsgemäßen Vorrichtung.

Beschreibung von Ausführungsbeispielen

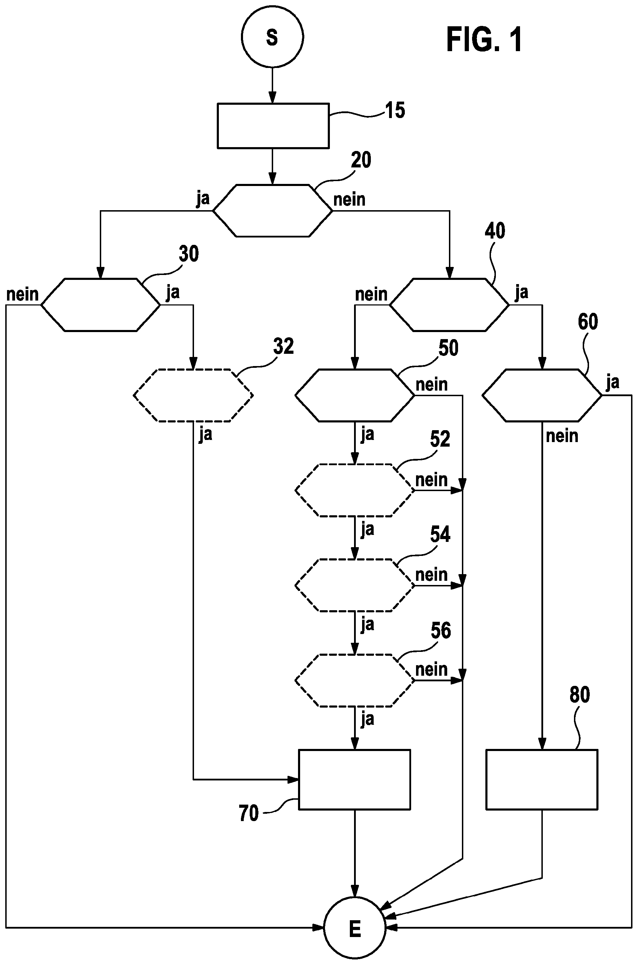

Fig. 1 zeigt ein erstes Ausführungsbeispiel eines erfindungsgemäßen Verfahrens. Das Verfahren dient zu Steuerung eines Antriebs 110, um einen Sattel 120 eines Zweirads 130 situationsbedingt in eine Fahrtposition 122 oder in eine Aufstiegsposition 124 zu verfahren, wobei das Zweirad 130 beispielsweise ein Fahrrad ist. Unter einer Aufstiegsposition 124 wird dabei eine Position verstanden, welche der Sattel 120 vorzugsweise für den Aufstieg oder aber auch für den Abstieg einnehmen soll. Dagegen ist die Fahrtposition 122 die Position des Sattels 120, die der Sattel 120 vorzugsweise bei einer Fahrt des Zweirads 130 einnehmen soll. Um hierbei ein besonders komfortables Auf- bzw. Absteigen als auch eine stabile sowie bequeme Fahrtposition 122 zu ermöglichen, ist der Sattel 120 in der Aufstiegsposition 124 tiefer als der Sattel 120 in der Fahrtposition 122.

Nach dem Start S des Verfahrens erfolgt ein Erfassen 15 einer Seitenneigung a, einer Beschleunigung a und einer Geschwindigkeit v des Zweirads. Dabei werden die Seitenneigung $\alpha$ und die Beschleunigung a kontinuierlich innerhalb der ersten Zeitspanne $T_1$ sowie die Geschwindigkeit v nach der ersten Zeitspanne $T_1$ erfasst. Die erste Zeitspanne $T_1$ kann je nach Person, welche das Zweirad 130 nutzt, eingestellt werden. So sollte die erste Zeitspanne $T_1$ für ältere Personen üblicherweise länger sein als für jüngere Personen. Dies liegt darin begründet, dass im Normalfall die jüngere Person ein dynamischeres Verhalten aufweist und beispielsweise schneller auf das Zweirad aufsteigt oder aber in einer kürzeren Zeit anfährt oder abbremst. Beispielsweise wäre eine erste Zeitspanne $T_1$ zwischen 3 - 10 s bei einer älteren Person typisch. Bei einer jüngeren Person wäre dagegen zum Beispiel eine erste Zeitspanne $T_1$ zwischen 1 - 3 s typisch. Nach dem Erfassen 15 der Seitenneigung a, der Beschleunigung a und der Geschwindigkeit v wird ein erster Beschleunigungsvergleich 20 durchgeführt. Bei diesem ersten Beschleunigungsvergleich 20 wird geprüft, ob die erfasste Beschleunigung a wenigstens für eine zweite Zeitspanne $T_2$ größer als eine minimale, positive Beschleunigung $a_{min,pos}$ ist:

$$a > a_{min,pos} \qquad (1)$$

Dabei kann die zweite Zeitspanne $T_2$ kontinuierlich ablaufen, d. h., dass sich mehrere Messwerte, welche die minimale, positive Beschleunigung $a_{min,pos}$ überschreiten, direkt aneinander anschließen, sich jedoch auch in Summe aus mehreren, kleineren Zeitspannen zusammensetzen. Die zweite Zeitspanne $T_2$ ist einstellbar und kann beispielsweise halb so lang wie die erste Zeitspanne $T_1$ sein. Hierdurch kann zuverlässig erkannt werden, ob ein Beschleunigungsvorgang von ausreichender Dauer war, um darauf auf eine Fahrt des Zweirads 130 zu schließen. Die minimale, positive Beschleunigung $a_{min,pos}$ ist abhängig vom typischen Fahrverhalten der Person, die das Zweirad nutzt. Ein üblicher Wert für die minimale, positive Beschleunigung $a_{min,pos}$ liegt etwa bei 1 m/s² für einen Freizeitradfahrer, kann jedoch auch bei älteren Personen darunter beziehungsweise bei Sportlern darüber liegen.

Stellt sich bei dem ersten Beschleunigungsvergleich 20 heraus, dass die Bedingung (1) erfüllt ist, so wird ein erster Geschwindigkeitsvergleich 30 durchgeführt. Beim ersten Geschwindigkeitsvergleich 30 wird geprüft, ob die Geschwindigkeit v größer als eine minimale Geschwindigkeit $v_{min}$ ist:

$$v\left(T_1\right) > v_{min} \qquad (2)$$

Der Wert der minimalen Geschwindigkeit $v_{min}$ ist dabei in jedem Fall Null oder positiv, jedoch davon abhängig, welche Person das Zweirad nutzt. So kann sich dieser Wert beispielsweise nach der Schrittgeschwindigkeit des Nutzers richten, da oberhalb dieser minimalen Geschwindigkeit $v_{min}$ üblicherweise auf ein Fahren des Zweirads geschlossen werden kann. Vorzugsweise liegt der Wert der minimalen Geschwindigkeit $v_{min}$ für eine jüngere Person daher bei 5 km/h. Für eine ältere Person ist der Wert der minimalen Geschwindigkeit $v_{min}$ üblicherweise geringer, da diese Person meist eine geringere Schrittgeschwindigkeit aufweist. Auch ist es denkbar den Wert der minimalen Geschwindigkeit $v_{min}$ auf Null festzusetzen, wodurch erkannt werden kann, ob das Zweirad steht oder in Bewegung ist. Ist die Bedingung (2) erfüllt, so wird im Verfahrensschritt 70 der Sattel 120 des Zweirads 130 in die Fahrtposition 122 verfahren.

Ergibt der erste Beschleunigungsvergleich 20 dagegen, dass die Bedingung (1) nicht erfüllt ist, so erfolgt ein zweiter Beschleunigungsvergleich 40. Im zweiten Beschleunigungsvergleich 40 wird geprüft, ob die Beschleunigung a wenigstens über die Dauer einer dritten Zeitspanne $T_3$ kleiner als eine minimale, negative Beschleunigung $a_{min,neg}$ ist:

$$a < a_{min,neg} \qquad (3)$$

Dabei kann die dritte Zeitspanne $T_3$ ebenso wie die zweite Zeitspanne $T_2$ ohne Unterbrechung ablaufen, jedoch auch aus mehreren einzelnen, kleineren Zeitspannen bestehen. Die minimale, negative Beschleunigung $a_{min,neg}$ ist ebenso wie die minimale, positive Beschleunigung $a_{min,pos}$ abhängig von der das Zweirad nutzenden Person, zudem jedoch auch von den Bremseigenschaften des Zweirads selbst. Üblicherweise wirkt beim Bremsvorgang eine höhere Beschleunigung als beim Anfahren, wodurch ein typischer Wert für die minimale, negative Beschleunigung $a_{min,neg}$ beispielsweise bei-2m/s² liegt.

Stellt sich bei dem zweiten Beschleunigungsvergleich 40 heraus, dass die Bedingung (3) erfüllt ist, so wird anschließend ein zweiter Geschwindigkeitsvergleich 60 durchgeführt. Im zweiten Geschwindigkeitsvergleich 60 wird geprüft, ob die Geschwindigkeit v größer als die minimale Geschwindigkeit $v_{min}$ ist:

$$v\left(T_1\right) > v_{min} \qquad (4)$$

Ist die Bedingung (4) nicht erfüllt, so wird der Sattel 120 des Zweirads 130 in die Aufstiegsposition 124 verfahren.

Stellt sich im zweiten Beschleunigungsvergleich 40 dagegen heraus, dass die Bedingung (3) nicht erfüllt ist, so erfolgt ein erster Seitenneigungsvergleich 50. Beim ersten Seitenneigungsvergleich 50 wird zum Einen geprüft, ob ein erster Seitenneigungswert $\alpha_1$ größer als ein erster Seitenneigungsgrenzwert $G_{\alpha,1}$ ist:

$$\alpha_1 > G_{\alpha 1} \qquad (5)$$

Zum Anderen wird die geprüft, ob ein zweiter Seitenneigungswert $\alpha_2$ kleiner als ein zweiter Seitenneigungsgrenzwert $G_{\alpha,2}$ ist und zudem nach dem ersten Seitenneigungswert $\alpha_1$ erfasst wurde:

$$\alpha_2 < G_{\alpha 2} \qquad (6),$$

und

$$t_{\alpha 2 < G, \alpha 2} > t_{\alpha 1 > G, \alpha 1} \qquad (7)$$

Sind sowohl die Bedingung (5) als auch die Bedingungen (6) und (7) erfüllt, so wird der Sattel 120 des Zweirads 130 im Verfahrensschritt 70 in die Fahrtposition 122 verfahren. Die Werte für den ersten Seitenneigungsgrenzwert $G_{\alpha,1}$ sowie für den zweiten Seitenneigungsgrenzwert $G_{\alpha,2}$ sind dabei einstellbar, jedoch unter der Bedingung, dass der erste Seitenneigungsgrenzwert $G_{\alpha,1}$ größer oder gleich dem zweiten Seitenneigungsgrenzwert $G_{\alpha,2}$ ist. So kann der erste Seitenneigungsgrenzwert $G_{\alpha,1}$ beispielsweise Werte zwischen 10° und 20° in Bezug auf die Normale der Fahrbahn und der zweite Seitenneigungsgrenzwert $G_{\alpha,2}$ Werte zwischen 1° und 10° in Bezug auf die Normale der Fahrbahn annehmen. Dies liegt im unterschiedlichen Aufstiegsverhalten verschiedener Nutzer begründet. So gibt es Personen, insbesondere ältere Personen, die das Fahrrad sehr weit zur Seite neigen, um ihr Bein beim Aufstieg nicht all zu hoch anheben zu müssen. In solch einem Fall können die Werte für den Seitenneigungsgrenzwert $G_{\alpha,1}$ sowie für den zweiten Seitenneigungsgrenzwert $G_{\alpha,2}$ größer gewählt werden als bei einer Person, die das Fahrrad beim Aufstieg nur leicht neigt.

In dem in Fig. 1 offenbarten Verfahren sind zudem noch weitere, optionale Verfahrensschritte aufgezeigt. So kann, wenn der erste Geschwindigkeitsvergleich 30 ergibt, dass die Bedingung (2) erfüllt ist, ein optionaler zweiter Seitenneigungsvergleich 32 durchgeführt werden, welcher noch vor dem Verfahrensschritt 70 durchgeführt wird. Mittels des zweiten Seitenneigungsvergleichs 32 wird geprüft, ob die Seitenneigung $\alpha$ nach der ersten Zeitspanne $T_1$ größer als der zweite Seitenneigungsgrenzwert $G_{\alpha,2}$ ist:

$$\alpha(T_1) < G_{\alpha,2} \qquad (8)$$

Ist diese Bedingung (8) erfüllt, wird der Sattel 120 im Verfahrensschritt 70 in die Fahrtposition 122 verfahren.

Des Weiteren besteht die Möglichkeit weitere, optionale Verfahrensschritte 52, 54 und/oder 56 zwischen dem ersten Seitenneigungsvergleich 50 und dem gegebenenfalls durchzuführenden Verfahrensschritt 70 durchzuführen, die einzeln oder aber in Kombination durchgeführt werden können. Zudem ist die Reihenfolge dieser optionalen Verfahrensschritte 52, 54 und 56 nach dem ersten Seitenneigungsvergleich 50 vertauschbar.

So wird in einem optionalen dritten Beschleunigungsvergleich 52 geprüft, ob wenigstens ein Beschleunigungswert $a_1$ größer als die minimale, positive Beschleunigung $a_{min,pos}$ ist und diese Überschreitung der minimalen, positiven Beschleunigung $a_{min,pos}$ zeitlich nach dem zweiten Seitenneigungswert $\alpha_2$ erfasst wurde:

$$a_1 > a_{min,pos} \qquad (9),$$

und

$$t_{a1 > a,min,pos} > t_{\alpha2 > G,\alpha2} \qquad (10)$$

Sind die beiden Bedingungen (9) und (10) erfüllt, wird der Sattel 120 in die Fahrtposition 122 verfahren.

In einem optionalen dritten Geschwindigkeitsvergleich 54 wird des Weiteren geprüft, ob die Geschwindigkeit v nach der ersten Zeitspanne $T_1$ größer als die minimale Geschwindigkeit $v_{min}$ ist:

$$v(T_1) > v_{min} \qquad (11)$$

Ist dies Fall, wird der Sattel 120 in die Fahrtposition 122 verfahren.

Zudem wird in einem optionalen dritten Seitenneigungsvergleich 56 noch vor dem Verfahrensschritt 70 überprüft, ob die Seitenneigung $\alpha$ nach der Zeitspanne $T_1$ kleiner als der zweite Seitenneigungsgrenzwert $G_{\alpha,2}$ ist:

$$\alpha(T1) < G_{\alpha,2} \qquad (12)$$

Ist dies der Fall, wird der Verfahrensschritt 70 durchgeführt und somit der Sattel 120 in die Fahrtposition 122 verfahren.

In all den zuvor genannten Fällen ist es möglich, dass der Sattel 120 verzögert in die Fahrtposition 122 bzw. in die Aufstiegsposition 124 verfahren wird. Eine typische Verzögerung liegt dabei zwischen 1 - 5 s.

In allen Fällen, die nicht explizit zu einem weiteren Verfahrensschritt führen, wird das Verfahren ohne Durchführung eines weiteren Verfahrensschritts beendet.

Nach Beendigung des Verfahrens kann das Verfahren erneut gestartet werden. Alternativ ist es auch denkbar, das Verfahren regelmäßig ablaufen zu lassen. Dabei ist es auch möglich, dass das Verfahren erneut gestartet wird, bevor das zuvor gestartete Verfahren abgeschlossen ist. Hierdurch können sich beispielsweise die jeweiligen ersten Zeitspannen $T_1$ der nacheinander ablaufenden Verfahren überschneiden.

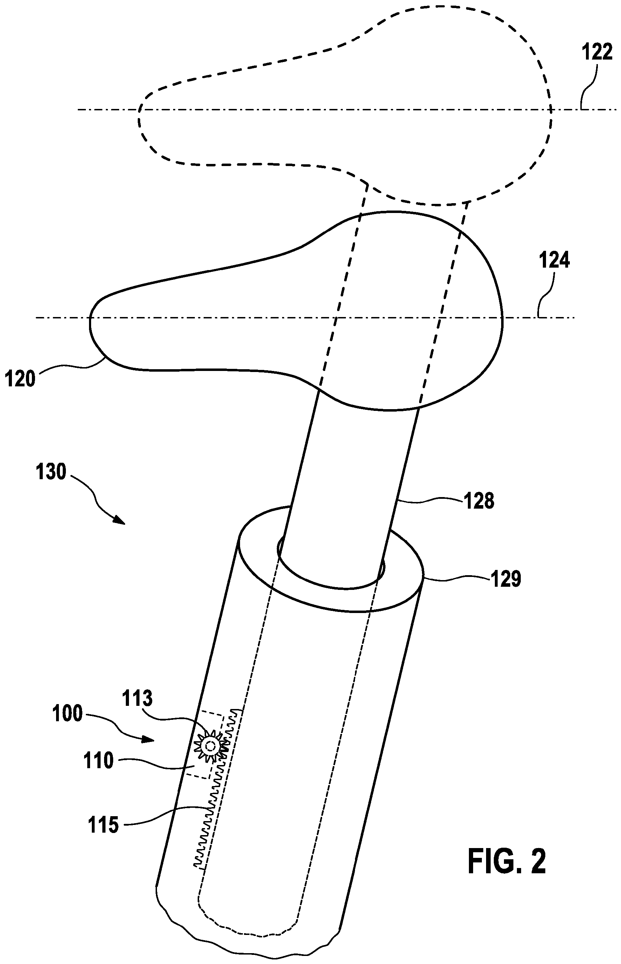

Fig. 2 zeigt ein erstes Ausführungsbeispiel einer erfindungsgemäßen Vorrichtung. Dargestellt ist eine Vorrichtung 100 mit einem Antrieb 110. Dieser Antrieb 110 dient zum Verfahren der Höhe eines Sattels 120 eines Zweirads 130. Die Ansteuerung des Antriebs erfolgt dabei wie in der Fig. 1 gezeigt. Der Sattel 120 kann dabei situationsbedingt in eine Fahrtposition 122 oder eine Aufstiegsposition 124 verfahren werden, wobei die Aufstiegsposition 124 gegenüber der Fahrtposition 122 tiefer angeordnet ist. Der Antrieb 110 ist innerhalb eines Sattelrohres 129 angeordnet. Des Weiteren ist ein Ritzel 123 vorgesehen, welches am Antrieb 110 befestigt ist. Das Ritzel liegt an einer Zahnschiene 115 an, welche von außen, vertikal an einer Sattelstange 128 des Sattels 120 befestigt ist. Somit kann mittels des Antriebs 110 das Ritzel 123 in Rotation versetzt werden, wodurch wiederum die am Sattelstange 128 befestigte Zahnschiene 1 nach oben oder unten bewegt und letztlich der Sattel 120 in seiner Höhe angepasst werden kann.

In einem alternativen, nicht dargestellten Ausführungsbeispiel ist die Zahnschiene 115 auf der Innenseite der Sattelstange 128 befestigt. Hierfür muss das Sattelrohr teilweise hohl ausgestaltet sein. In einem weiteren, alternativen, nicht dargestellten Ausführungsbeispiel, ist das Ritzel 113 durch eine Gewindestange 111 ersetzt.

**Patentansprüche**

1. Verfahren zur Steuerung eines Antriebs (110), um einen Sattel (120) eines Zweirads (130) in eine Fahrtposition (122) oder in eine Aufstiegsposition (124) zu verfahren, mit folgenden Verfahrensschritten:

     - Erfassen (15) einer Beschleunigung (a) und einer Seitenneigung (a) des Zweirads (130) kontinuierlich innerhalb einer ersten Zeitspanne $(T_1)$ und einer Geschwindigkeit (v) des Zweirads (130) nach der ersten Zeitspanne $(T_1)$,

- Durchführen eines ersten Beschleunigungsvergleichs (20), welcher prüft, ob die Beschleunigung (a) wenigstens für eine zweite Zeitspanne ($T_2$) größer als eine minimalen positiven Beschleunigung ($a_{min,pos}$) ist, und

- wobei wenn der erste Beschleunigungsvergleich (20) positiv ist, ein erster Geschwindigkeitsvergleich (30) durchgeführt wird, welcher prüft, ob die Geschwindigkeit (v) größer als eine minimale Geschwindigkeit ($v_{min}$) ist, wobei wenn der erste Geschwindigkeitsvergleich (30) positiv ist, der Sattel (120) in die Fahrtposition (122) verfahren wird (70), oder

- wobei wenn der erste Beschleunigungsvergleich (20) negativ ist, ein zweiter Beschleunigungsvergleich (40) durchgeführt wird, welcher prüft, ob die Beschleunigung (a) wenigstens für eine dritte Zeitspanne ($T_3$) kleiner als eine minimale, negative Beschleunigung ($a_{min,neg}$) ist, wobei wenn der zweite Beschleunigungsvergleich (40) positiv ist, ein zweiter Geschwindigkeitsvergleich (60) durchgeführt wird, welcher prüft, ob die Geschwindigkeit (v) größer als die minimale Geschwindigkeit ($v_{min}$) ist, wobei wenn der zweite Geschwindigkeitsvergleich (60) negativ ist, der Sattel (120) in die Aufstiegsposition (124) verfahren wird (80).

2. Verfahren nach Anspruch 1, **dadurch gekennzeichnet, dass** wenn der zweite Beschleunigungsvergleich (40) negativ ist, ein erster Seitenneigungsvergleich (50) durchgeführt wird, welcher prüft, ob ein erster Seitenneigungswert ($\alpha_1$) größer als ein erster Seitenneigungsgrenzwert ($G_{\alpha,1}$) ist, und ob ein zweiter Seitenneigungswert ($\alpha_2$), welcher nach dem ersten Seitenneigungswert ($\alpha_1$) erfasst wurde, kleiner als ein zweiter Seitenneigungsgrenzwert ($G_{\alpha,2}$) ist, wobei der erste Seitenneigungsgrenzwert ($G_{\alpha,1}$) größer gleich dem zweiten Seitenneigungsgrenzwert ($G_{\alpha,2}$) ist, und wobei wenn der erste Seitenneigungsvergleich (50) positiv ist, der Sattel (120) in die Fahrtposition (122) verfahren wird (70).

3. Verfahren nach Anspruch 1 oder 2, **dadurch gekennzeichnet, dass** der Sattel (120) verzögert verfahren wird.

4. Verfahren nach einem der vorhergehenden Ansprüche, **dadurch gekennzeichnet, dass** wenn der erste Geschwindigkeitsvergleich (30) positiv ist, zusätzlich ein zweiter Seitenneigungsvergleich (32) durchgeführt wird, welcher prüft, ob die Seitenneigung ($\alpha$) nach der ersten Zeitspanne ($T_1$) kleiner als ein zweiter Seitenneigungsgrenzwert ($G_{\alpha,2}$) ist, wobei wenn der zweite Seitenneigungsvergleich (32) positiv ist, der Sattel (120) in die Fahrtposition (122) verfahren wird (70).

5. Verfahren nach Anspruch 2, **dadurch gekennzeichnet, dass** wenn der erste Seitenneigungsvergleich (50) positiv ist, zusätzlich ein dritter Beschleunigungsvergleich (52) durchgeführt wird, welcher prüft, ob wenigstens ein Beschleunigungswert ($a_1$), welcher zeitlich nach dem zweiten Seitenneigungswert ($\alpha_2$) erfasst wurde, größer als die minimale, positive Beschleunigung ($a_{min,pos}$) ist, wobei wenn der dritte Beschleunigungsvergleich (52) positiv ist, der Sattel (120) in die Fahrtposition (122) verfahren wird (70).

6. Verfahren nach Anspruch 2 oder 5, **dadurch gekennzeichnet, dass** wenn der erste Seitenneigungsvergleich (50) positiv ist, zusätzlich ein dritter Geschwindigkeitsvergleich (54) durchgeführt wird, welcher prüft, ob die Geschwindigkeit (v) größer als die minimale Geschwindigkeit ($v_{min}$) ist, wobei wenn der dritte Geschwindigkeitsvergleich (50) positiv ist, der Sattel (120) in die Fahrtposition (122) verfahren wird (70).

7. Verfahren nach einem Ansprüche 2, 5 oder 6, **dadurch gekennzeichnet, dass** wenn der erste Seitenneigungsvergleich (50) positiv ist, zusätzlich ein dritter Seitenneigungsvergleich (56) durchgeführt wird, welcher prüft, ob die Seitenneigung (a) nach der ersten Zeitspanne ($T_1$) kleiner als der zweite Seitenneigungsgrenzwert ($G_{\alpha,2}$) ist, wobei wenn der dritte Seitenneigungsvergleich (50) positiv ist, der Sattel (120) in die Fahrtposition (122) verfahren wird (70).

8. Vorrichtung (100) mit einem Antrieb (110) zum situationsbedingten Verfahren eines Sattels (120) eines Zweirads (130) in eine Fahrtposition (122) oder in eine Aufstiegsposition (124), wobei die Vorrichtung ein Sattelrohr (129) und eine Sattelstange (128) des Sattels (120) des Zweirads aufweist und wobei der Antrieb (110) innerhalb des Sattelrohrs (129) des Zweirads (130) angeordnet und mit einer Gewindestange (111) oder einem Ritzel (113) verbunden ist, **dadurch gekennzeichnet, dass** die Sattelstange (128) des Sattels (120) eine Zahnschiene (115) aufweist, wobei die Gewindestange (111) oder das Ritzel (113) an der Zahnschiene (115) anliegen, und dass der Antrieb (110) nach einem Verfahren gemäß der Ansprüche 1 bis 7 gesteuert ist.

9. Vorrichtung (100) nach Anspruch 8, **dadurch gekennzeichnet, dass** die Zahnschiene (115) außerhalb der Sattelstange (128) angebracht ist.

10. Vorrichtung (100) nach Anspruch 8, **dadurch gekennzeichnet, dass** die Zahnschiene (115) innerhalb der Sattelstange (128) angebracht ist.

## Claims

1. Method for controlling a drive (110) for displacing a saddle (120) of a two-wheeled vehicle (130) into a travel position (122) or into a mounting position (124), comprising the following method steps:

   - measuring (15) an acceleration (a) and a lateral inclination (a) of the two-wheeled vehicle (130) continuously within a first time interval $(T_1)$ and a speed (v) of the two-wheeled vehicle (130) after the first time interval $(T_1)$,
   - carrying out a first acceleration comparison (20), which checks whether the acceleration (a) is greater than a minimum positive acceleration $(a_{min,pos})$, at least for a second time interval $(T_2)$, and

   ○ wherein, if the first acceleration comparison (20) is positive, a first speed comparison (30) is carried out, which checks whether the speed (v) is higher than a minimum speed $(v_{min})$, wherein, if the first speed comparison (30) is positive, the saddle (120) is displaced (70) into the travel position (122), or

   ○ wherein, if the first acceleration comparison (20) is negative, a second acceleration comparison (40) is carried out, which checks whether the acceleration (a) is less than a minimum negative acceleration $(a_{min,neg})$, at least for a third time interval $(T_3)$, wherein, if the second acceleration comparison (40) is positive, a second speed comparison (60) is carried out, which checks whether the speed (v) is higher than the minimum speed $(v_{min})$, wherein, if the second speed comparison (60) is negative, the saddle (120) is displaced (80) into the mounting position (124).

2. Method according to Claim 1, **characterized in that** if the second acceleration comparison (40) is negative, a first lateral inclination comparison (50) is carried out, which checks whether a first lateral inclination value $(\alpha_1)$ is greater than a first lateral inclination limiting value $(G_{\alpha,1})$, and whether a second lateral inclination value $(\alpha_2)$, which has been measured after the first lateral inclination value $(\alpha_1)$, is less than a second lateral inclination limiting value $(G_{\alpha,2})$, wherein the first lateral inclination limiting value $(G_{\alpha,1})$ is greater than or equal to the second lateral inclination limiting value $(G_{\alpha,2})$ and wherein, if the first lateral inclination comparison (50) is positive, the saddle (120) is displaced (70) into the travel position (122).

3. Method according to Claim 1 or 2, **characterized in that** the saddle (120) is displaced with a time delay.

4. Method according to one of the preceding claims, **characterized in that** if the first speed comparison (30) is positive, a second lateral inclination comparison (32) is additionally carried out, which checks whether the lateral inclination $(\alpha)$ after the first time interval $(T_1)$ is smaller than a second lateral inclination limiting value $(G_{\alpha,2})$, wherein, if the second lateral inclination comparison (32) is positive, the saddle (120) is displaced (70) into the travel position (122).

5. Method according to Claim 2, **characterized in that** if the first lateral inclination comparison (50) is positive, a third acceleration comparison (52) is additionally carried out, which checks whether at least one acceleration value $(a_1)$, which was measured chronologically after the second lateral inclination value $(\alpha_2)$, is greater than the minimum positive acceleration $(a_{min,pos})$ wherein, if the third acceleration comparison (52) is positive, the saddle (120) is displaced (70) into the travel position (122).

6. Method according to Claim 2 or 5, **characterized in that** if the first lateral inclination comparison (50) is positive, a third speed comparison (54) is additionally carried out, which checks whether the speed (v) is higher than the minimum speed (vmin), wherein, if the third speed comparison (50) is positive, the saddle (120) is displaced (70) into the travel position (122).

7. Method according to one of Claims 2, 5 or 6, **characterized in that** if the first lateral inclination comparison (50) is positive, a third lateral inclination comparison (56) is additionally carried out, which checks whether the lateral inclination $(\alpha)$ after the first time interval $(T_1)$ is less than the second lateral inclination limiting value $(G_{\alpha,2})$, wherein, if the third lateral inclination comparison (50) is positive, the saddle (120) is displaced (70) into the travel position (122).

8. Device (100) having a drive (110) for displacing a saddle (120) of a two-wheeled vehicle (130), depending on a situation, into a travel position (122) or into a mounting position (124), wherein the device has a saddle tube (129) and a saddle pillar (128) of the saddle (120) of the two-wheeled vehicle, and wherein the drive (110) is arranged within the saddle tube (129) of the two-wheeled vehicle (130) and is connected to a threaded rod (111) or a pinion (113), **characterized in that** the saddle pillar (128) of the saddle (120) has a rack (115), wherein the threaded rod (111) or the pinion (113) bears on the rack (115), and **in that** the drive (110) is controlled in accordance with a method according to Claims 1 to 7.

9. Device (100) according to Claim 8, **characterized in that** the rack (115) is fitted outside the saddle pillar (128).

10. Device (100) according to Claim 8, **characterized in that** the rack (115) is fitted within the saddle pillar (128).

## Revendications

1. Procédé de commande d'un entraînement (110) pour déplacer une selle (120) d'un deux-roues (130) dans une position de conduite (122) ou dans une position de montée (124), comprenant les étapes de procédé suivantes :

   - détecter en continu (15) une accélération (a) et une inclinaison latérale (a) du deux-roues (130) pendant une première période ($T_1$) et une vitesse (v) du deux-roues (130) après la première période ($T_1$),
   - effectuer une première comparaison d'accélération (20) qui vérifie si l'accélération (a) est supérieure à une accélération positive minimale ($a_{min,pos}$) au moins pendant une deuxième période ($T_2$), et
   - dans lequel, lorsque la première comparaison d'accélération (20) est positive, on effectue une première comparaison de vitesse (30) qui vérifie si la vitesse (v) est supérieure à une vitesse minimale ($v_{min}$), dans lequel, lorsque la première comparaison de vitesse (30) est positive, la selle (120) est déplacée (70) vers la position de conduite (122), ou
   - dans lequel, lorsque la première comparaison d'accélération (20) est négative, on effectue une deuxième comparaison d'accélération (40) qui vérifie si l'accélération (a) est inférieure à une accélération négative minimale ($a_{min,neg}$) au moins pendant une troisième période ($T_3$), dans lequel, lorsque la deuxième comparaison d'accélération (40) est positive, on effectue une deuxième comparaison de vitesse (60) qui vérifie si la vitesse (v) est supérieure à la vitesse minimale ($V_{min}$), dans lequel, lorsque la deuxième comparaison de vitesse (60) est négative, la selle (120) est déplacée (80) vers la position de montée (124).

2. Procédé selon la revendication 1, **caractérisé en ce que**, lorsque la deuxième comparaison d'accélération (40) est négative, on effectue une première comparaison d'inclinaison latérale (50) qui vérifie si une première valeur d'inclinaison latérale (ai) dépasse une première valeur limite d'inclinaison latérale ($G_{\alpha,1}$) et si une deuxième valeur d'inclinaison latérale ($\alpha_2$), qui a été détectée après la première valeur d'inclinaison latérale ($\alpha_1$), est inférieure à une deuxième valeur limite d'inclinaison latérale ($G_{\alpha,2}$), dans lequel la première valeur limite d'inclinaison latérale ($G_{\alpha,1}$) est supérieure ou égale à la deuxième valeur limite d'inclinaison latérale ($G_{\alpha,2}$) et dans lequel, lorsque la première comparaison d'inclinaison latérale (50) est positive, la selle (120) est déplacée (70) dans la position de conduite (122).

3. Procédé selon la revendication 1 ou 2, **caractérisé en ce que** la selle (120) est déplacée de manière retardée.

4. Procédé selon l'une des revendications précédentes, **caractérisé en ce que**, lorsque la première comparaison de vitesse (30) est positive, on effectue en outre une deuxième comparaison d'inclinaison latérale (32) qui vérifie si l'inclinaison latérale ($\alpha$) est inférieure à une deuxième valeur limite d'inclinaison latérale ($G_{\alpha,2}$) après la première période ($T_1$), dans lequel, lorsque la deuxième comparaison d'inclinaison latérale (32) est positive, la selle (120) est déplacée (70) dans la position de conduite (122).

5. Procédé selon la revendication 2, **caractérisé en ce que**, lorsque la première comparaison d'inclinaison latérale (50) est positive, on effectue en outre une troisième comparaison d'accélération (52) qui vérifie si au moins une valeur d'accélération ($a_1$), qui a été détectée dans le temps après la deuxième valeur d'inclinaison latérale ($\alpha_2$), est supérieure à l'accélération minimale positive ($a_{min,pos}$), dans lequel, lorsque la troisième comparaison d'accélération (52) est positive, la selle (120) est déplacée (70) dans la position de conduite (122).

6. Procédé selon la revendication 2 ou 5, **caractérisé en ce que**, lorsque la première comparaison d'inclinaison latérale (50) est positive, on effectue en outre une troisième comparaison de vitesse (54) qui vérifie si la vitesse (v) est supérieure à la vitesse minimale ($V_{min}$), dans lequel, lorsque la troisième comparaison de vitesse (50) est positive, la selle (120) est déplacée (70) dans la position de conduite (122).

7. Procédé selon les revendications 2, 5 ou 6, **caractérisé en ce que**, lorsque la première comparaison d'inclinaison latérale (50) est positive, on effectue en outre une troisième comparaison d'inclinaison latérale (56) qui vérifie si l'inclinaison latérale ($\alpha$) est inférieure à la deuxième valeur limite d'inclinaison latérale ($G_{\alpha,2}$) après la première période ($T_1$), dans lequel, lorsque la troisième comparaison d'inclinaison latérale (50) est positive, la selle (120) est déplacée (70) dans la position de conduite (122).

8. Dispositif (100) comportant un mécanisme d'entraînement (110) pour le déplacement en fonction de la situation d'une selle (120) d'un deux-roues (130) dans une position de conduite (122) ou dans une position de montée (124), dans lequel le dispositif comporte un tube de selle (129) et une tige de selle (128) de la selle (120) du deux-roues et dans lequel le mécanisme d'entraînement (110) est disposé à l'intérieur du tube de selle (129) du deux-roues (130) et est relié à une tige filetée (111) ou à un pignon (113),

**caractérisé en ce que** la tige de selle (128) de la selle (120) comprend un rail denté (115), dans lequel la tige filetée (111) ou le pignon (113) est adjacent au rail denté (115) et **en ce que** le mécanisme d'entraînement (110) est commandé par un procédé selon les revendications 1 à 7.

9. Dispositif (100) selon la revendication 8, **caractérisé en ce que** le rail denté (115) est monté à l'extérieur de la tige de selle (128).

10. Dispositif (100) selon la revendication 8, **caractérisé en ce que** le rail denté (115) est monté à l'intérieur de la tige de selle (128).

FIG. 1

**FIG. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202011103073 U1
- EP 2540606 A
- JP 2005262900 B